# EUROPÄISCHE PATENTSCHRIFT

(11) **EP 0 913 564 B1**
(45) Veröffentlichungstag und Bekanntmachung des Hinweises auf die Patenterteilung: **16.04.2003**
(21) Anmeldenummer: 97119038.4
(22) Anmeldetag: 31.10.1997
(51) Int. Cl.: F02D 33/02, F01N 3/20, B60L 11/00

(54) **Verfahren zur Verminderung des Schadstoffausstosses einer Brennkraftmaschine**
Process for reducing pollutant emissions of an internal combustion engine
Procédé de réduction de l'émission de polluants d'un moteur à combustion interne

(43) Veröffentlichungstag der Anmeldung: 06.05.1999
(73) Patentinhaber: The Swatch Group Management Services AG, 2501 Biel (CH)
(72) Erfinder: del Re, Luigi, 8053 Zürich (CH); Apter, Robert, 1400 Yverdon (CH); Handschin, Daniel, 2502 Biel (CH)
(74) Vertreter: Barbeaux, Bernard

(56) Entgegenhaltungen:
- DE-A- 4 029 672
- DE-C- 4 338 740
- US-A- 5 323 868
- DATABASE WPI Section PQ, Week 9737 Derwent Publications Ltd., London, GB; Class Q13, AN 97-396778 XP002058824 & JP 09 068 065 A (NISSAN MOTOR CO LTD) , 11.März 1997

## Beschreibung

Die Erfindung betrifft ein Verfahren zur Verminderung des Schadstoffausstosses einer Brennkraftmaschine nach dem Oberbegriff des Anspruchs 1.

Verschiedenste Vorrichtungen und Verfahren zur Abgasreinigung sind bereits bekannt.

Die EP-B 0 561 311 beispielsweise betrifft eine Abgasreinigungsvorrichtung mit einem auf Zeolithbasis aufgebauten Absorber zur kurzzeitigen Schadstoffzwischenspeicherung und einem in Reihe zu diesem stromabwärts angeordneten katalytischen Konverter zur Schadstoffumwandlung. In den dazwischenliegenden Abgasrohrabschnitt mündet ein ausreichend vom Absorber beabstandetes Rohr, das von einem Brenner mit eigener Brennstoff- und Luftversorgung ausgeht. Durch diese Anordnung ermöglichen vom Brenner erzeugte Gase ohne Beeinträchtigung des Zeolith-Absorbers einerseits den katalytischen Konverter zu erhitzen und kurzfristig auf seine Betriebstemperatur zu bringen, sowie anderseits thermische Nachreaktionen von Abgasbestandteilen im genannten Abgasrohrabschnitt, d.h. noch vor Eintritt in den Konverter, zu erwirken.

Nach der DE-OS 41 41 946 wird in ähnlichem Sinne vorgeschlagen, Sekundärluft zwischen der Brennkraftmaschine und dem Katalysator in den Abgasstrom einzublasen. Hierzu ist jedoch eine Luftpumpe vorgesehen, deren Inbetriebnahme gezielt nur solange erfolgt, bis die Betriebstemperatur des Katalysators erreicht ist.

Auch bei der DE-OS 37 23 703 wird dem Abgasstrom vor Eintritt in den Katalysator Luft beigemischt. Im Gegensatz zu den beiden oben erwähnten Lösungen wird allerdings auf ein separates Gas- bzw. Luftfördermittel verzichtet, indem die Brennkraftmaschine selbst das Fördermittel bildet. Dazu ist vorgesehen, einen Teil der Zylinder nicht mehr zu befeuern und als Luftpumpen einzusetzen.

Die DE-PS 40 29 672 schlägt die Verbesserung vor, einzelne Zylinder nur kurzzeitig auszuschalten, d.h. auf jeweils eine kurze Unterbrechung mehrere Arbeitstakte folgen zu lassen, damit die Temperatur der Zylinder aufrechterhalten bleibt. Im allgemeinen ist es vorteilhaft, entsprechend der Unterbrechung der Gemischzufuhr auch die Zündung auszusetzen.

Aus der DE-PS 4 338 740 ist hingegen ein Verfahren bekannt, bei dem nach einem Abschaltbefehl an die Brennkraftmaschine in den Zylindern noch mindestens je eine Zündung erfolgt.

Die hier aufgeführten Schriften betreffen die Situationsverbesserung bei der Inbetriebnahme einer Brennkraftmaschine, d.h. insbesondere eines Ottomotors eines Strassenfahrzeuges. Tatsächlich gewinnt der Schadstoffausstoss während der Inbetriebnahme eines Fahrzeuges zunehmend an Bedeutung, da einerseits die Abgasvorschriften restriktiver werden, anderseits der Schadstoffausstoss während des Normalbetriebes dank wirkungsvolleren Katalysatoren zurückgeht.

Obwohl mit diesen Vorschlägen durchaus eine Schadstoffreduktion bei der Inbetriebnahme einer Brennkraftmaschine erreicht werden kann, ist es Aufgabe der vorliegenden Erfindung, diesbezüglich eine weitere Verbesserung zu schaffen.

Die Lösung der erfindungsgemässen Aufgabe ergibt sich aus den Merkmalen des Anspruchs 1.

Vorteilhafte Ausgestaltungen des erfindungsgemässen Verfahrens sind Gegenstand der abhängigen Ansprüche.

Dem erfindungsgemässen Verfahren liegt die unerwartete Feststellung zugrunde, dass betreffend Schadstoffemissionen in den ersten Betriebsminuten einer Brennkraftmaschine, insbesondere eines Ottomotors, nicht nur der Anlassvorgang selbst von Bedeutung ist, sondern auch der vorhergehende Abschaltvorgang.

Zum Zweck einer möglichst geringen Schadstoffbildung bei der Inbetriebnahme einer Brennkraftmaschine schlägt das erfindungsgemässe Verfahren vor, nicht nur während dem Anlassen für optimale Verhältnisse zu sorgen, sondern ebenfalls beim Abschalten der Brennkraftmaschine.

Im Gegensatz zu einer im wesentlichen unkontrollierten Abschaltweise bei herkömmlichen Strassenfahrzeugen mit Brennkraftmaschine wird nach der vorliegenden Erfindung vorgeschlagen, die Brennkraftmaschine und den katalytischen Konverter vor dem Motorstillstand einer Reinigungs- bzw. Spülphase zu unterziehen. Bei dieser Reinigungs- bzw. Spülphase wird :
- die Bewegung der Brennkraftmaschine vor dem Motor-stillstand entweder durch Auslaufenlassen, Befeuerung oder durch Fremdantrieb für bestimmte Zeit weiterhin aufrecht-erhalten und
- mindestens zeitweise in mindestens einzelnen Zylin-dern der Brennkraftmaschine die Brennstoffzufuhr unter-brochen und ausschliesslich Luft gefördert.

Dadurch wird erreicht, dass die restlichen, in der Brennkraftmaschine angesammelten Schadstoffe dem noch auf Betriebstemperatur befindlichen Katalysator zugeführt werden und der Katalysator mit Sauerstoff angereichert wird.

Mit andern Worten können mit dem erfindungsgemässen Verfahren die "Altlasten" aus dem vorhergehenden Betrieb für den darauffolgenden Warm- oder Kaltstart reduziert werden.

Während einem üblichen, willkürlich erfolgenden Abschaltvorgang einer Brennkraftmaschine muss nicht zwangsweise eine beträchtliche Menge an Schadstoffen anfallen, jedoch verbleiben die aus dem letzten Betrieb angesammelten Schadstoffe in der Brennkraftmaschine, d.h. in den in Frage kommenden Hohlräumen der Brennkraftmaschine, wie beispielsweise Ansaugtrakt, Verbrennungstrakt, Ausgangstrakt und/oder Kurbelgehäuse. Beim darauffolgenden Kaltstart passieren diese Schadstoffe dann die noch nicht auf Betriebstemperatur befindliche und somit nicht funktionstüchtige Abgasreinigungsvorrichtung. Dies ist auch weitgehend dann der Fall, wenn Mittel zur beschleunigten Inbetriebsetzung der Abgasreinigungvorrichtung vorhanden sind, d.h. beispielsweise bei zusätzlich fremderhitzbarem Katalysator, vorgeschaltetem Brenner usw.

Dieser Nachteil wird von der erfindungsgemässen Lösung behoben, da ein bestimmter Abschaltvorgang vorgesehen ist, bei welchem die in der Brennkraftmaschine angesammelten Schadstoffe ausgespült und in die auf ihrer Betriebstemperatur befindlichen und vollständig funktionsfähigen Abgasreinigungsvorrichtung gelangen.

Grundsätzlich sind beim Ottomotor vorwiegend drei Schadstoffkomponenten zu nennen: Kohlenmonoxid, unverbrannte Kohlenwasserstoffe sowie Stickoxide, im weiteren auch mit CO, HC beziehungsweise NO_{X} bezeichnet.

Die Kohlenmonoxidbildung ist in erster Linie auf Luft- bzw. Sauerstoffmangel zurückzuführen und kann somit über das Luft-Kraftstoffverhältnis beeinflusst werden. Auch bei Sauerstoffüberschuss kann Kohlenmonoxid infolge lokaler Gemisch-Inhomogenitäten sowie Einfrieren der Reaktionen in Wandnähe entstehen.

Ausserdem entstehen bei grosser Wärmeabfuhr in Wandnähe, so dass die Flamme verlöscht (Quench-Effekt), und in Bereichen, in welche die Flamme nicht gelangt, d.h. in den verschiedenen Spalten des Brennraumes (Kolbenringe, Zylinderkopfdichtung, Kolben-Feuersteg usw.) unverbrannte Kohlenwasserstoffe wie Aromate, Olefine, und Paraffine. Da eine Abkühlung in Wandnähe zu einer HC-Bildung führt, steht der prozentuale HC-Gehalt des Abgases in Abhängigkeit vom Oberflächen/Volumenverhältnis des Brennraumes, was bedeutet, dass die HC-Bildung bei Motoren mit niedrigem Hubraum pro Zylinder stärker ins Gewicht fällt. Eine weitere Quelle für unverbrannte Kohlenwasserstoffe im Abgas bildet die Ablösung des Schmierfilmes und die anschliessende Beförderung in den Auspufftrakt, wo nur eine Teilnachoxidation stattfindet. Allgemein kann der HC-Ausstoss mit einer Lambdaregelung wirkungsvoll gesenkt werden.

Stickoxide im Brennraum entstehen besonders bei hohen Temperaturen und bei leichtem Luftüberschuss. Bei extremen Fett- oder Magergemischen hingegen werden die Temperaturen zur Aufspaltung von N₂ und O₂ kaum erreicht. Unter anderem kann auch die NO_{X}-Erzeugung mittels einer Lambdaregelung eingedämmt werden.

Da das erfindungsgemässe Verfahren vorsieht, vor dem Abschalten einer Brennkraftmaschine eine Phase einzufügen, bei welcher durchschnittlich mehr Sauerstoff hinzugegeben wird, als bei einem stöchiometrischen Betrieb, können insbesondere die in der Brennkraftmaschine angesammelten Kohlenwasserstoffe und Kohlenmonoxid dem noch auf Betriebstemperatur befindlichen und betriebsbereiten Katalysator zugeführt werden. Ausserdem kann auf diese Weise, wie erwähnt, der Sauerstoffvorrat des Katalysators aufgefrischt werden, so dass beim nächsten Startvorgang die Oxidation von CO- und HC-Molekülen wirkungsvoller erfolgen kann. Diese Vorbereitungsmassnahme ist besonders für einen darauffolgenden Kaltstart vorteilhaft, weil hierbei aufgrund eines fetten Gemisches und niedrigen Brennraumtemperaturen vorwiegend CO und HC's anfallen und die NO_{X}-Erzeugung gering ist. Die Reduktion von NO_{X} durch den Katalysator muss im allgemeinen erst nach der Anlass- und Aufwärmphase gewährleistet sein, wenn der Motor stark belastet und die Brennraumtemperatur entsprechend hoch ist.

Das erfindungsgemässe Verfahren ist insbesondere für Ottomotoren vorteilhaft. Messungen bestätigen, dass mit diesem Verfahren die CO- und HC-Emissionen während der Startphase bedeutend gesenkt werden können.

Da, wie erwähnt, die HC-Bildung mit abnehmendem Hubraum stärker ins Gewicht fällt, ist das erfindungsgemässe Verfahren für Motoren mit kleinem Hubraum besonders vorteilhaft. Beispielsweise fallen darunter Motoren mit einem Zylindervolumen von unter 250cm³, wobei die Erfindung, wie gesagt, für Maschinen mit grösserem Volumen beim Anlassen ebenfalls eine deutliche Schadstoffreduktion gewährleistet.

Obwohl Dieselmotoren deutlich tiefere CO- und HC-Emissionswerte als der Ottomotor erzeugen, kann das erfindungsgemässe Verfahren auch für Diesel- oder andere Verbrennungsmotoren von Vorteil sein.

Das erfindungsgemässen Verfahren ist nicht nur derart auszubilden, dass am Ende des Reinigungsvorganges eine möglichst schadstofffreie Brennkraftmaschine vorliegt, sondern auch derart, dass dieser Vorgang an sich schadstoff- und verbrauchsarm erfolgt.

Dies kann besonders dann gewährleistet werden, wenn die Brennkraftmaschine während dem Reinigungsvorgang bzw. während dem Durchpumpen von Luft von einer weiteren Maschine angetrieben wird, die Brennkraftmaschine also zur Aufrechterhaltung der Drehzahl keine Leistung mehr erzeugen muss. Hierzu bietet sich besonders ein Fahrzeug mit Hybridantrieb an, d.h. mit Brennkraftmaschine einerseits und Elektromaschine andererseits. Insbesondere eignet sich ein Seriehybridfahrzeug für die Anwendung des erfindungsgemässen Verfahrens, weil hier die Elektromaschine ohnehin in direkter Antriebsverbindung mit der Brennkraftmaschine steht, leistungsstark ist und als Motor betrieben werden kann.

Bei einem Parallel-Hybridfahrzeug ergeben sich ähnliche Vorteile wie bei einem herkömmlichen Fahrzeug mit thermischem Antrieb, bei welchem der Anlasser als Antriebsmittel eingesetzt werden kann. Vorzugsweise ist dazu ein Anlasser grösserer Leistung und Lebendauer vorzusehen. Wird die Brennkraftmaschine durch ein fremdes Antriebsmittel angetrieben, so ist es grundsätzlich nicht von Bedeutung, ob die Brennkraftmaschine belastet wird oder nicht, respektive von der Kurbelwelle Leistung bezogen wird oder nicht.

Falls allerdings der Einsatz eines Antriebs-Hilfsmittels nicht vorgesehen ist, kann das erfindungsgemässe Verfahren auch unter Brennstoffzufuhr durchgeführt werden, wobei hierzu durchschnittlich betrachtet der Sauerstoff- bzw. Luftanteil zu erhöhen ist. Ein Magergemisch würde dieser Bedingung zwar entsprechen, jedoch geht daraus auch eine grössere HC-Erzeugung hervor, da der Luftüberschuss kühlende, flammhemmende Wirkung hat. Das erfindungsgemässe Verfahren bzw. die erhöhte, durchschnittliche Sauerstoffzunahme soll aber nicht eine Gemisch- bzw. Lambdaveränderung bedingen, sondern vom motortypischen Gemisch möglichst entkoppelt sein. Dies wird ermöglicht, indem mindestens einzelne Zylinder mindestens zeitweise vorwiegend Luft liefern. Die entsprechenden Zylinder arbeiten dann als Luftpumpen. Indem die Pumptätigkeit vorteilhafterweise alternierend unter den Zylindern aufgeteilt wird, kommt es bei keinem Zylinder zu einem massiven Temperaturrückgang. Ein genügend grosser Luftdurchsatz steht also einem möglichst ungestörten Motorbetrieb gegenüber. Ein entsprechendes Optimum ist vom Fachmann ohne weiteres zu finden. Beispielsweise können bei jedem Zylinder auf einen Luftförder-Zyklus mehrere Normalbetriebszyklen folgen, wobei die Luftförder-Zyklen der verschiedenen Zylinder vorteilhafterweise zeitlich voneinander zu versetzten sind. Hierzu kann beispielsweise die Schrift DE 40 29 672 herangezogen werden. Wie mehrmals festgehalten, ist es allerdings entscheidend, dass dieses Verfahren ausdrücklich vor dem Motorstillstand erfolgt. Für den Fall, dass die Brennkraftmaschine ohne Antriebshilfsmittel selbst ihre Bewegung, d.h. die Drehung ihrer Kurbelwelle aufrechterhält, ist es zugunsten eines geringen Verbrauches, einer geringen zusätzlichen Schadstofferzeugung und einer kurzdauernden Reinigungsphase sinnvoll, die Brennkraftmaschine nicht zu belasten bzw. lastfrei zu halten. Der Betrieb während der Spülphase ist vorteilhafterweise ausschliesslich zur Sauerstoffförderung vorzusehen. Selbst wenn das erfindungsgemässe Verfahren derart ausgebildet ist, dass während dem Spülvorgang zugunsten einer möglichst schadstoffbefreiten Brennkraftmaschine zusätzlich Schadstoffe entstehen, dann kann die ausgeschiedene Schadstoffgesamtmenge während der Zeitspanne zwischen dem Abschaltbefehl des Fahrers bis zum erneuten Erreichen der Betriebstemperatur der Brennkraftmaschine und der Abgasreinigungsvorrichtung beim darauffolgenden Start geringer sein. Allerdings sei erwähnt, dass der Abschaltvorgang gemäss den europäischen Abgasnormen nicht gemessen wird. Obwohl zur Zeit nur der Anlass- und Normalbetrieb geprüft wird, ist das erfindungsgemässe Verfahren in Abhängigkeit der verschiedensten Parameter, wie Art der Brennkraftmaschine, Art der Abgasreinigungsvorrichtung, Temperatur der von der Brennkraftmaschine angesaugten Luft, usw. möglichst derart auszubilden, dass der Gesamtschadstoffausstoss möglichst tief gehalten werden kann. Dies bedeutet, dass der Reinigungsvorgang der Brennkraftmaschine nach der Erfindung möglichst nur kurze Zeit dauern sollte, da sonst der Vorteil einer vorzüglichen Reinigung durch den Nachteil eines zu grossen, zusätzlichen Verbrauches und Schadstoffausstosses aufgehoben wird.

Immer noch ausgehend vom Fall, dass kein Antriebs-Hilfsmittel vorgesehen ist, kann das erfindungsgemässe Verfahren dennoch ohne Brennstoffzufuhr durchgeführt werden, indem man die Brennkraftmaschine möglichst lastfrei auslaufen lässt. Damit trotz fehlendem Antrieb eine genügend lange Auslaufzeit erzielt werden kann, sind die Bremsdrehmomente klein zu halten. Beispielsweise kann es bei tiefen Drehzahlen sinnvoll sein, zwecks Verminderung der Drosselverluste die Drosselklappe, sofern vorhanden, vollständig zu öffnen. Weiter kann das Bremsmoment auch über die Ventilzeiten vermindert werden. Die Auslaufzeit kann aber auch mit einer Vergrösserung der Schwungmasse der Brennkraftmaschine verlängert werden.

Weiter ist bei der Wahl der Dauer und des Drehzahlverlaufes des Spülvorganges die Lärmemissionen zu berücksichtigen. Es ist beispielsweise nicht möglich, während dem Spülvorgang aufgrund der Lärmentwicklung und auch des Verbrauches eine hohe Drehzahl einzunehmen. Dies ist auch nicht notwendig, da bei niedrigen Drehzahlen sehr effizient CO und HC's aus der Brennkraftmaschine evakuiert werden können und der Katalysator mit Sauerstoff versorgt wird.

Dennoch findet die effizienteste Evakuierung einer bestimmten Schadstoffart im allgemeinen bei einer bestimmten Drehzahl statt. In Abhängigkeit des jeweiligen Motortyps kann ein optimaler Drehzahlverlauf gefunden werden, bei welchem die Brennkraftmaschine innert kürzester Zeit weitgehend von Schadstoffen befreit wird. Weiter ist bei einigen Motoren festgestellt worden, dass beispielsweise eine Reinigung des Kurbelgehäuses mehr Zeit in Anspruch nimmt, als die Reinigung des Ansaug-, Verbrennungs- und Ausgangstraktes. Der Drehzahlverlauf wird also definiert durch den Ansammlungsort der Schadstoffe, den jeweiligen Schadstofftyp, die Lärmentwicklung, den zusätzlichen Energiebedarf usw. Weiter unten folgen Beispiele von Drehzahlverläufen.

Nach der vorliegenden Erfindung kann die Reinigungs- bzw. Spülphase der Brennkraftmaschine mittels einem sauerstoffenthaltenden Gas erfolgen. Naheliegend hierzu ist selbstverständlich, wie erwähnt, die Umgebungsluft.

Naheliegenderweise ist die Reinigungs- bzw. Spülphase infolge des Abschaltbefehls des Fahrers auszulösen, was wie gesagt bedeutet, dass die Brennkraftmaschine für eine gewisse Zeit auf irgendeine bestimmte Weise noch weiter in Betrieb bzw. in Bewegung bleibt.

Das erfindungsgemässe Verfahren muss jedoch nicht zwangsweise ausschliesslich durch den Abschaltbefehl des Fahrers auslösbar sein, sondern kann auch aufgrund bestimmter Betriebsbedingungen ohne Dazutun des Fahrers selbsttätig eingeleitet werden. Beispielsweise kann ein nahezu lastfreier Standgasbetrieb über eine bestimmte Zeit als Auslösekriterium für die erfindungsgemässe Reinigungs- bzw. Spülphase vorgesehen werden. Hierzu sei zum Beispiel an Lichtsignalanlagen insbesondere bei Baustellen erinnert, da dort der Motor oftmals erst nach längerem Wartem abgestellt wird. Eine solche Situation kann von einer Steuer- oder Regeleinrichtung erkannt und das erfindungsgemässe Verfahren vorbeugend eingeleitet werden, damit der Motor bei allfälligem Abschaltbefehl des Fahrers dann baldmöglichst zum Stillstand kommt. In diesem Sinne gibt es noch weitere Beispiele, auf deren Aufzählung hier jedoch verzichtet wird.

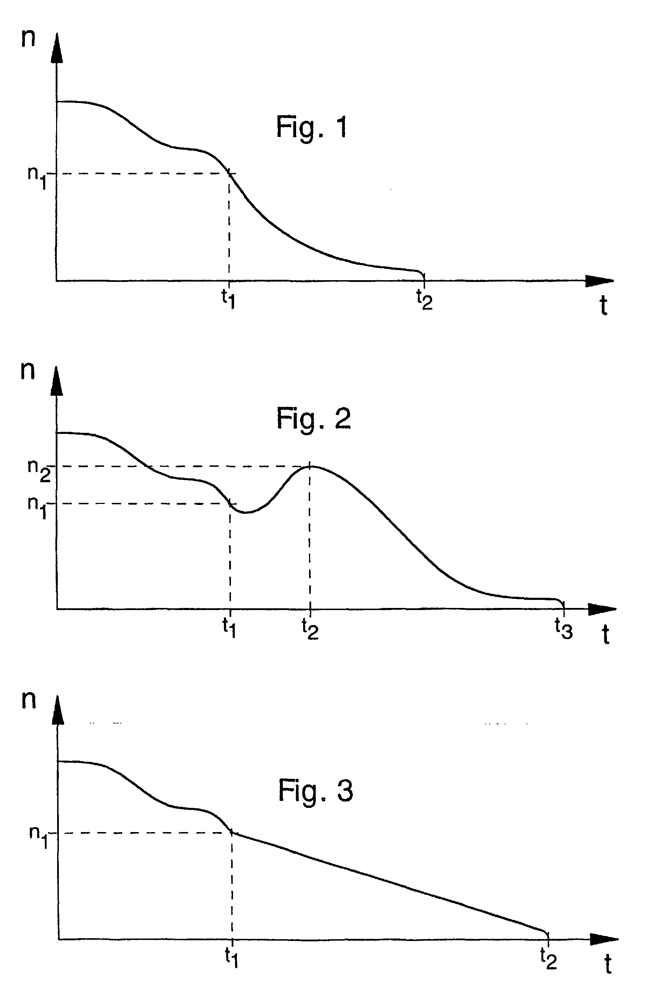

Nachfolgend wird rein beispielsweise anhand der Zeichnungen näher erläutert, wie der zeitliche Verlauf des erfindungsgemässen Verfahrens ausgebildet sein kann. Es zeigen alle Figuren 1 bis 5 Drehzahl-Zeitdiagramme von verschiedenen Ausführungsformen des erfinderischen Verfahrens, wobei es sich dabei nur um Beispiele handelt und im Sinne der Erfindung noch andere Drehzahlverläufe vorgesehen werden können. In allen sechs Figuren wird davon ausgegangen, dass zum Zeitpunkt t₁ ein Auslösebefehl auftritt, der wie gesagt direkt vom Fahrer oder von einer elektronischen Einrichtung ausgehen kann. Zu diesem Zeitpunkt t₁ weist die Brennkraftmaschine eine beliebige Drehzahl n₁ auf. Von t₁ an beginnt der Einsatz des erfindungsgemässen Verfahrens, wobei die Drehzahl bis kurz vor dem Maschinenstillstand einen bestimmten, ausgewählten Verlauf hat. Natürlich endet die Motordrehung kurz vor dem Stillstand nicht asymptotisch, sondern, wie in den Figuren dargestellt, mehr oder weniger plötzlich.

Ein erstes Ausführungsbeispiel des erfindungsgemässen Verfahrens zur Reinigung einer Brennkraftmaschine für deren nächste Inbetriebnahme ist in Figur 1 dargestellt. Der Drehzahlverlauf sinkt nach t₁ bis zum Maschinenstillstand zum Zeitpunkt t₂ in etwa exponentiell ab. Dies ist ein typischer Verlauf für eine weder fremdgetriebene, noch befeuerte Brennkraftmaschine. Man lässt die Brennkraftmaschine möglichst lastarm auslaufen.

Sollte allerdings diese Auslaufzeit nicht ausreichen, so kann vorgesehen werden, die Drehzahl zunächst nochmals zu erhöhen, wie es in Figur 2 gezeigt ist. Auf diese Weise kann eine gründlichere Spülung der Brennkraftmaschine und Sauerstoffsättigung des Katalysators erzielt werden .Dabei erreicht die Brennkraftmaschine zunächst zum Zeitpunkt t₂ die Drehzahl n₂, um anschliessend bis zum Zeitpunkt t₃ abzusinken. Die zur Drehzahlerhöhung notwendige Leistung kann durch Brennstoffzufuhr oder Fremdantreibung erfolgen, wie schon mehrmals festgehalten.

Selbstverständlich kann auch die Kurvenform von Figur 1 unter Brennstoffzugabe oder Fremdantreibung vorteilhaft sein, womit beispielsweise eine Verlängerung der Auslaufzeit erreicht wird.

Gemäss Figur 3 sinkt die Drehzahl ab t₁ bis ungefähr zum Zeitpunkt t2 etwa linear ab Auch dies kann ohne Antriebshilfe durch Auslaufenlassen der Brennkraftmaschine erreicht werden. Die Kurvenform kann durch das Bremsmoment der Maschine gesteuert bzw. geregelt werden, indem beispielsweise die Drosselklappenstellung in Funktion der Drehzahl fortlaufend verändert wird.

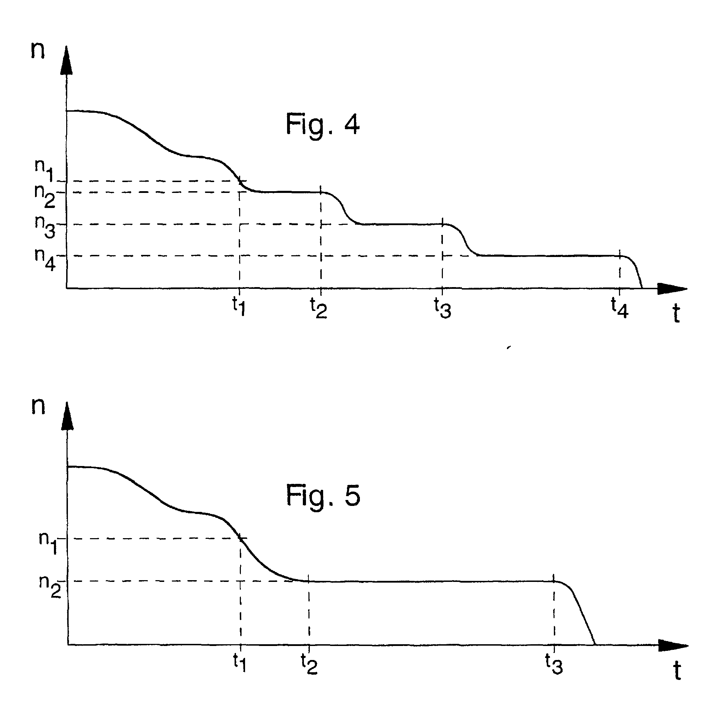

In Figur 4 ist ein stufenförmiger Rückgang der Drehzahl dargestellt. Zunächst wird nach dem Auslösesignal bei t₁ die Drehzahl n₂ eingestellt und für eine gewisse Zeit beibehalten, dann nach t₂ weiter abgesenkt und bis t₃ auf einem tieferen Drehzahlwert n₃ gehalten und anschliessend ab t₃ ein weiteres Mal auf einen tieferen Drehzahlwert n₄ abgesenkt, der bis zum Zeitpunkt t₄ aufrechterhalten wird. Mit einem solchen Betrieb können beispielsweise gezielt die Desorption bestimmter Schadstoffe oder bestimmte Schadstoff-Ansammelstellen angesprochen werden. Bei einem solchen Drehzahlverlauf ist allerdings ein Energieaufwand zur Drehzahlbeibehaltung notwendig. Die einzelnen Treppenhorizontalen können aber auch leicht abfallend sein.

Figur 5 zeigt einen weiteren typischen Fall, bei welchem entweder fremde Antriebsmittel die Drehzahl aufrechterhalten, oder die Brennkraftmaschine in Betrieb gehalten wird. Zunächst wird ab t₁ ein fixer Drehzahlwert n₂ eingestellt. Dann wird dieser Wert n₂ im wesentlichen zwischen t₂ und t₃ konstant gehalten.

Wie gesagt, sind dies nur einige Beispiele, die untereinander kombinierbar sind. Darüber hinaus können noch weitere, hier nicht gezeigt Drehzahlverläufe vorgesehen werden.

Obwohl das erfindungsgemässe Verfahren zur Verminderung des Schadstoffausstosses einer Brennkraftmaschine das Abschalten bzw. Hinunterfahren der Brennkraftmaschine betrifft, ist es zwecks grösstmöglicher Schadstoffreduktion sehr vorteilhaft, das erfindungsgemässe Verfahren einerseits mit beliebigen Abgasreinigungsvorrichtungen, wie katalytischer Konverter, Zwischenspeicher, Russfilter, usw., auch mit beliebigen Anlassverfahren, wie sie aus den erwähnten Schriften hervorgehen, zu kombinieren.

Ferner kann auch ein Gebläse zur Luftförderun eingesetzt werden.

Das erfindungsgemässe Verfahren kann selbstverständlich auch für ein schienengebundenes Fahrzeug vorgesehen werden.

Darüberhinaus muss sich die Brennkraftmaschine nicht auf ein Fahrzeug beziehen. Beispielsweise kann das erfindungsgemässe Verfahren auch für eine ortsfeste Anlage, wie beispielsweise eine Heizung, vorgesehen werden.

## Patentansprüche

1. Verfahren zum Verringerung des Schadstoffausstoßes einer Brennkraftmaschine mit einer Brennstoffversorgung und einem katalytischen Konverter, bei dem
vor einer Abschaltung der Brennkraftmaschine ein Reinigungs- bzw. Spülvorgang vorgesehen ist, wobei
- die Bewegung der Brennkraftmaschine vor einer Abschaltung entweder durch Auslaufenlassen, Befeuerung oder Fremdantrieb für bestimmte Zeit weiterhin in geregelter Weise aufrechterhalten wird, und
- mindestens zeitweise und in mindestens einzelnen Zylindern der Brennkraftmaschine die Brennstoffzufuhr unterbrochen und ausschließlich Luft gefördert wird,
und während dem Reinigungsvorgang ein bestimmter, ausgewählter Drehzahlverlauf der Brennkraftmaschine vorgesehen ist,
so dass die restlichen, in der Brennkraftmaschine angesammelten Schadstoffe dem noch auf Betriebstemperatur befindlichen Katalysator zugeführt werden und der Katalysator mit Sauerstoff angereichert wird.

2. Verfahren nach Anspruch 1, **dadurch gekennzeichnet, dass** man die Brennkraftmaschine während dem Reinigungsvorgang bis zum Stillstand auslaufen lässt, dass die Brennstoffversorgung der Brennkraftmaschine während des Reinigungsvorganges vollständig ausgeschaltet ist, und dass das Bremsdrehmoment der Brennkraftmaschine in Funktion ihrer Drehzahl geregelt wird.

3. Verfahren nach Anspruch 2, **dadurch gekennzeichnet, dass** das Bremsdrehmoment der Brennkraftmaschine durch Veränderung der Drosselklappenstellung in Funktion der Drehzahl geregelt wird.

4. Verfahren nach Anspruch 1, **dadurch gekennzeichnet, dass** die Bewegung der Brennkraftmaschine vor der Abschaltung durch Befeuerung einzelner Zylinder der Brennkraftmaschine aufrechterhalten ist, und
in den übrigen nicht befeuerten Zylindern der Brennkraftmaschine die Brennstoffzufuhr unterbrochen und ausschließlich Luft gefördert wird so dass diese Zylinder als Luftpumpen arbeiten.

5. Verfahren nach Anspruch 4, **dadurch gekennzeichnet, dass** die Pumptätigkeit alternierend unter den Zylindern der Brennkraftmaschine aufgeteilt wird.

6. Verfahren nach Anspruch 1, **dadurch gekennzeichnet, dass** die Brennkraftmaschine während dem Reinigungsvorgang von einer als Motor betreibbaren, elektrischen Maschine angetrieben wird.

7. Verfahren nach Anspruch 6, **dadurch gekennzeichnet, dass** das Verfahren für ein nicht-schienengebundenes Fahrzeug mit Hybridantrieb vorgesehen ist.

8. Verfahren nach Anspruch 7, **dadurch gekennzeichnet, dass** das Verfahren für ein Serie-Hybridfahrzeug vorgesehen ist.

9. Verfahren nach Anspruch 6, **dadurch gekennzeichnet, dass** die Brennkraftmaschine während dem Reinigungsvorgang von einem Anlasser der Brennkraftmaschine angetrieben wird.

10. Verfahren nach Anspruch 1, **dadurch gekennzeichnet, dass** während dem Reinigungsvorgang die Drehzahl im wesentlichen auf einem bestimmten Wert gehalten wird.

11. Verfahren nach Anspruch 1 **dadurch gekennzeichnet, dass** während dem Reinigungsvorgang die Drehzahl kontinuierlich etwa linear absinkt.

12. Verfahren nach Anspruch 1, **dadurch gekennzeichnet, dass** während dem Reinigungsvorgang die Drehzahl im wesentlichen treppenförmig absinkt.

13. Verfahren nach einem der vorangehenden Ansprüche, **dadurch gekennzeichnet, dass** die Drehzahl zunächst auf einen bestimmten Wert gebracht wird, bevor der Reinigungsvorgang durchgeführt wird.

14. Verfahren nach einem der vorangehenden Ansprüche, **dadurch gekennzeichnet, dass** mit der Brennstoffversorgung die Zündung ausgeschaltet wird.

15. Verfahren nach einem der vorangehenden Ansprüche, **dadurch gekennzeichnet, dass** der Reinigungsvorgang infolge eines Abschaltbefehls des Fahrzeuglenkers ausgelöst wird.

16. Verfahren nach einem der Ansprüche 1 bis 14, **dadurch gekennzeichnet, dass** der Reinigungsvorgang infolge eines Abschaltbefehls einer elektronischen Vorrichtung automatisch ausgelöst wird.

17. Verfahren nach einem der vorangehenden Ansprüche, **dadurch gekennzeichnet, dass** durch eine Schwungradvergrößerung die Auslaufzeit verlängert werden kann.

18. Verfahren nach einem der vorangehenden Ansprüche, **dadurch gekennzeichnet, dass** die Brennkraftmaschine ein Ottomotor ist.

19. Verfahren nach einem der vorangehenden Ansprüche, **dadurch gekennzeichnet, dass** die Brennkraftmaschine pro Zylinder einen Hubraum von weniger als im wesentlichen 250cm³ aufweist.

## Claims

1. Method for reducing the pollutant emission of an internal combustion engine comprising a fuel supply and a catalytic converter, wherein
- before the standstill of the internal combustion engine a cleaning or scavenging procedure is provided, wherein
- the movement of the internal combustion engine is still maintained in a regulated manner for a certain time before standstill either by letting it run out, by sparking or by an external drive, and
- at least temporally in at least individual cylinders of the internal combustion engine the supply of fuel is interrupted and exclusively air is delivered,
and during the cleaning procedure a certain selected course of rotational speed of the internal combustion engine is provided.
so that the remaining pollutants accumulated in the internal combustion engine are supplied to the catalytic converter which is still at the operating temperature and the catalytic converter is enriched with oxygen.

2. Method according to claim 1, wherein one lets the internal combustion engine run out during the cleaning procedure until standstill, wherein the fuel supply of the internal combustion engine during the cleaning procedure is completely switched off, and wherein the braking moment of the internal combustion engine is controlled as a function of its rotational speed.

3. Method according to claim 2, wherein the braking moment of the internal combustion engine is controlled by changing the throttle flap position as a function of the rotational speed.

4. Method according to claim 1, wherein the movement of the internal combustion engine is maintained before standstill by sparking individual cylinders of the internal combustion engine, and wherein
in the remaining non-sparked cylinders of the internal combustion engine, the fuel supply is switched off so that these cylinders operate as air pumps.

5. Method according to claim 4, wherein the pump activity is alternately divided amongst the cylinders of the internal combustion engine.

6. Method according to claim 1, wherein during the cleaning procedure the internal combustion engine is driven by an electrical machine which is operated as a motor.

7. Method according to claim 6, wherein the method is provided for a non rail-borne vehicle with a hybrid drive.

8. Method according to claim 7, wherein the method is provided for a series hybrid vehicle.

9. Method according to claim 6, wherein during the cleaning procedure the internal combustion engine the internal combustion engine is driven by a starter of the internal combustion engine.

10. Method according to claim 1, wherein during the cleaning procedure the rotational speed is essentially kept at a certain value.

11. Method according to claim 1, wherein during the cleaning procedure the rotational speed decreases continuously in a substantially linear way.

12. Method according to claim 1, wherein during the cleaning procedure the rotational speed essentially decreases in a step-shaped manner.

13. Method according to any of the preceding claims, wherein the rotational speed is firstly brought to a certain value before the cleaning procedure is carried out.

14. Method according to any of the preceding claims, wherein with the supply of fuel the ignition is switched off.

15. Method according to any of the preceding claims, wherein the cleaning procedure is initiated as a result of a switching off command of the vehicle driver.

16. Method according to any one of claims 1 to 14, wherein the cleaning procedure is automatically initiated as a result of a command of an electronic device.

17. Method according to any of the preceding claims, wherein the run-out time is extended by way of enlargement of the flywheel.

18. Method according to any of the preceding claims, wherein the internal combustion engine is an Otto motor.

19. Method according to any of the preceding claims, wherein the internal combustion engine comprises a piston-swept volume of less than essentially 250cm³ per cylinder.

## Revendications

1. Procédé pour réduire les émissions polluantes d'un moteur à combustion équipé d'une alimentation en carburant et d'un convertisseur catalytique, dans lequel
avant un arrêt du moteur à combustion, il est prévu un processus de nettoyage ou assainissement selon lequel :
- le mouvement du moteur à combustion est encore maintenu de manière contrôlée durant un certain temps avant arrêt en le laissant s'immobiliser, par un allumage ou au moyen d'un entraînement externe, et
- au moins temporairement et au moins dans une partie des cylindres du moteur à combustion, l'alimentation en carburant est interrompue et uniquement de l'air est délivré,
et, durant le processus de nettoyage, une évolution déterminée et choisie du régime du moteur à combustion est prévue,
de sorte que les polluants résiduels accumulés dans le moteur à combustion soient délivrés au convertisseur catalytique qui se trouve encore à sa température de fonctionnement et de sorte que le convertisseur catalytique soit enrichit en oxygène.

2. Procédé selon la revendication 1, **caractérisé en ce que**, durant le processus de nettoyage, on laisse le moteur à combustion s'immobiliser jusqu'à l'arrêt, **en ce que** l'alimentation en carburant du moteur à combustion est totalement interrompue durant le processus de nettoyage, et **en ce que** le couple de freinage du moteur à combustion est contrôlé en fonction de son régime.

3. Procédé selon la revendication 2, **caractérisé en ce que** le couple de freinage du moteur à combustion est contrôlé par le biais d'un changement de position des soupapes en fonction du régime.

4. Procédé selon la revendication 1, **caractérisé en ce que** le mouvement du moteur à combustion avant son arrêt est maintenu par allumage d'une partie des cylindres du moteur à combustion, et,
dans les cylindres non-allumés restants du moteur à combustion, l'alimentation en carburant est interrompue et exclusivement de l'air est délivré de sorte que ces cylindres opèrent comme pompes à air.

5. Procédé selon la revendication 4, **caractérisé en ce que** l'activité de pompage de cylindres est répartie de manière alternée entre les cylindres du moteur à combustion.

6. Procédé selon la revendication 1, **caractérisé en ce que** durant le processus de nettoyage, le moteur à combustion est entraîné par une machine électrique opérant comme moteur.

7. Procédé selon la revendication 6, **caractérisé en ce que** le procédé est prévu pour un véhicule non-porté sur rails équipé d'un entraînement hybride.

8. Procédé selon la revendication 7, **caractérisé en ce que** le procédé est prévu pour un véhicule hybride-série.

9. Procédé selon la revendication 6, **caractérisé en ce que**, durant le processus de nettoyage, le moteur à combustion est entraîné par un démarreur du moteur à combustion.

10. Procédé selon la revendication 1, **caractérisé en ce que**, durant le processus de nettoyage, le régime est essentiellement maintenu à un niveau déterminé.

11. Procédé selon la revendication, **caractérisé en ce que**, durant le processus de nettoyage, le régime décroît continuellement de manière approximativement linéaire.

12. Procédé selon la revendication 1, **caractérisé en ce que**, durant le processus de nettoyage, le régime décroît essentiellement par paliers.

13. Procédé selon l'une quelconque des revendications précédentes, **caractérisé en ce que** le régime est tout d'abord amené à un niveau déterminé avant l'exécution du processus de nettoyage.

14. Procédé selon l'une quelconque des revendications précédentes, **caractérisé en ce que** l'allumage est également interrompu avec l'alimentation en carburant.

15. Procédé selon l'une quelconque des revendications précédentes, **caractérisé en ce que** le processus de nettoyage est exécuté en réponse à une commande d'arrêt provenant du conducteur du véhicule.

16. Procédé selon l'une quelconque des revendications 1 à 14, **caractérisé en ce que** le processus de nettoyage est exécuté automatiquement en réponse à une commande d'arrêt provenant d'un dispositif électronique.

17. Procédé selon l'une quelconque des revendications précédentes, **caractérisé en ce que** le temps d'immobilisation du moteur est rallongé par une augmentation du volant d'inertie.

18. Procédé selon l'une quelconque des revendications précédentes, **caractérisé en ce que** le moteur à combustion est un moteur Otto.

19. Procédé selon l'une quelconque des revendications précédentes, **caractérisé en ce que** le moteur à combustion présente une cylindrée inférieure à essentiellement 250 cm³ par cylindre.
